(19)

**Europäisches Patentamt**
**European Patent Office**
**Office européen des brevets**

(11) **EP 4 454 749 A1**

(12) **EUROPEAN PATENT APPLICATION**

(43) Date of publication:
**30.10.2024 Bulletin 2024/44**

(21) Application number: **23208759.3**

(22) Date of filing: **09.11.2023**

(51) International Patent Classification (IPC):
**B01J 20/04** (2006.01)  **B01J 20/10** (2006.01)
**B01J 20/28** (2006.01)  **B01J 20/30** (2006.01)
**C01B 33/22** (2006.01)  **C02F 1/28** (2023.01)
**G21F 9/12** (2006.01)  **C02F 101/00** (2006.01)

(52) Cooperative Patent Classification (CPC):
**B01J 20/04; B01J 20/10; B01J 20/28083;**
**B01J 20/30; B01J 20/3085; C01B 33/22;**
**C02F 1/281; G21F 9/12;** C02F 2101/006

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **24.04.2023 KR 20230053125**
       **18.09.2023 KR 20230123785**

(71) Applicant: **Giant Chemical Co., Ltd**
**Yangsan-si Gyeongsangnam-do 50567 (KR)**

(72) Inventors:
 • **KANG, Dong Gyun**
   **44784 Ulsan (KR)**
 • **KIM, Dong Hyun**
   **44784 Ulsan (KR)**
 • **CHOI, Bong Seok**
   **44784 Ulsan (KR)**

 • **KIM, Dae Uk**
   **44784 Ulsan (KR)**
 • **KANG, Jin Kyu**
   **44784 Ulsan (KR)**
 • **HAN, Seung Yun**
   **44784 Ulsan (KR)**
 • **SEONG, Dong Min**
   **44784 Ulsan (KR)**
 • **KIM, Ho Jae**
   **44784 Ulsan (KR)**
 • **JO, Su Jin**
   **44784 Ulsan (KR)**
 • **KIM, Seo Yoon**
   **44784 Ulsan (KR)**
 • **CHOI, Bo Gyeong**
   **44784 Ulsan (KR)**

(74) Representative: **Gulde & Partner**
**Patent- und Rechtsanwaltskanzlei mbB**
**Wallstraße 58/59**
**10179 Berlin (DE)**

(54) **RADIOACTIVE ELEMENT ABSORBENT CONTAINING MAGNESIUM SILICATE AND MANUFACTURING METHOD THEREOF**

(57)    The present invention relates to an adsorbent for radioactive elements that contains magnesium silicate and a manufacturing method thereof, and more particularly to an adsorbent for radioactive elements, such as cesium, cobalt and strontium, that contains magnesium silicate, and a manufacturing method thereof. The present invention can specify the pore size and MgO and $SiO_2$ contents of the magnesium silicate that optimize the cesium removal efficiency.

EP 4 454 749 A1

**Description**

**BACKGROUND OF THE INVENTION**

**(A) FIELD OF THE INVENTION**

The present invention relates to an adsorbent for radioactive elements that contains magnesium silicate and a manufacturing method thereof, and more particularly to an adsorbent for radioactive elements, such as cesium, cobalt and strontium, that contains magnesium silicate, and a manufacturing method thereof.

**(B) DESCRIPTION OF THE RELATED ART**

Nano-porous materials with a large specific surface area and uniform porosity are widely used as adsorbents or catalyst supports, in separation and purification processes, and as ion exchange media. In particular, the synthesis of new nanostructured materials with controlled porosity is continuously researched in the field of advanced materials.

Among these materials, magnesium silicate, which is a porous inorganic compound synthesized through the precipitation reaction of water-soluble magnesium salts and sodium silicate, can be used in various applications such as industrial, food refining, and cosmetic raw materials, owing to its strong adsorption performance.

As the world's dependence on nuclear power plants for energy continues to grow, the handling of radioactive waste generated due to nuclear accidents has become a major concern.

Radioactive cesium ($^{137}$Cs) is a major contributor to radioactive contamination resulting from nuclear accidents and nuclear waste. Due to its high solubility in water, long half-life, and behavior similar to potassium ions in the human body, it can lead to various cancers, including lung cancer and bone marrow cancer, if absorbed into the body. Hence, there is a growing need for technologies to remove the radioactive cesium.

Cobalt (Co), a non-naturally occurring radioactive isotope, reacts with water or dissolved oxygen to create corrosion products upon exposed to the high-temperature, high-pressure environments during the operation of nuclear power plants. The corrosion products, along with radioactive fission products from nuclear fuels, can form oxide films on the cooling water pipelines. These oxide films, composed of the elements of coolant contact facility like iron, chromium, nickel, copper, and cobalt, reduce the heat transfer efficiency required for the cooling operation, leading to decreased operational efficiency of the nuclear power plant.

Strontium (Sr) is a soft, silver-white alkaline earth metal that is more reactive than calcium. It reacts vigorously with water to produce strontium hydroxide ($Sr(OH)_2$) and hydrogen gas ($H_2$), and in the presence of air, it undergoes combustion to form strontium oxide and strontium nitride. Radioactive contamination isotopes cesium and strontium, which are abundantly formed in the uranium nuclear fission process and have high heat emission and half-lives of over 30 years, must be removed from radioactive wastewater.

However, the presence of various chemical substances in radioactive liquid waste, the generation of foam during operation, and corrosion issues make operation conditions difficult and waste treatment challenging. Therefore, the use of adsorbents is being considered as an efficient method for the removal of radioactive elements.

[Related Documents]

[Patent Documents]

(Patent Document 0001)
Korean Patent Registered Publication No. 10-2221740

**SUMMARY OF THE INVENTION**

**TECHNICAL PROBLEM**

It is an object of the present invention to provide an adsorbent for radioactive element comprising magnesium silicate that is capable of adsorbing cesium, cobalt, and strontium.

It is another object of the present invention to specify the pore size and MgO and $SiO_2$ contents of the magnesium silicate that optimize the cesium removal efficiency.

It is further another object of the present invention to provide a method for manufacturing the radioactive element adsorbent comprising a magnesium silicate for adsorption of radioactive elements such as cesium, cobalt, and strontium.

The technical challenges that the invention seeks to address are not limited to those mentioned above, and other technical challenges not mentioned can be clearly understood by those skilled in the art from the disclosure of the invention in this field.

## TECHNICAL SOLUTION

The present invention provides an adsorbent for radioactive element that contains magnesium silicate.

In the present invention, the radioactive element is at least one selected from the group consisting of cesium, cobalt, and strontium.

In the present invention, the magnesium silicate has a pore size of 33 to 40 Å.

In the present invention, the magnesium silicate has a magnesium oxide (MgO) content lower by 3 to 4% and a silicon dioxide ($SiO_2$) content higher by 8 to 8.5% than the magnesium silicate according to USP/NF standards.

In the present invention, the magnesium silicate comprises 14.4 to 14.6 parts by weight of MgO and 72.4 to 72.6 parts by weight of $SiO_2$ with respect to 100 parts by weight of the magnesium silicate.

The present invention also provides a method for manufacturing an adsorbent for radioactive element that contains magnesium silicate, comprising the steps of (A1) preparing a silicate precursor; (A2) mixing a magnesium precursor and an ammonium salt to prepare a mixture; and (A3) adding the silicate precursor to the mixture to produce an adsorbent for radioactive element that contains magnesium silicate.

In the present invention, the magnesium precursor is magnesium chloride ($MgCl_2$).

## EFFECTS OF INVENTION

The present invention can provide a radioactive element adsorbent comprising magnesium silicate that is capable of adsorbing cesium, cobalt, and strontium.

Furthermore, the present invention can embody the pore size and MgO and $SiO_2$ contents of the magnesium silicate that optimize the adsorption efficiency for the radioactive element.

The present invention can also provide a method for manufacturing an adsorbent for radioactive element like cesium, cobalt, and strontium that contains the magnesium silicate.

The effects of the present invention are not limited to those mentioned above, and other undisclosed effects will be readily understood by those skilled in the art from the wording of the claims.

## BRIEF DESCRIPTION OF DRAWINGS;

FIG. 1 presents photographs showing the color change of magnesium silicate of the present invention after adsorption of cesium.

FIG. 2 presents photographs showing the color change of magnesium silicate of the present invention after adsorption of cobalt.

FIG. 3 presents photographs showing the color change of magnesium silicate of the present invention after adsorption of strontium.

FIG. 4 is a schematic diagram illustrating the adsorption mechanism of the magnesium silicate of the present invention for radioactive elements.

## DETAILED DESCRIPTION OF THE EMBODIMENTS

The terms used in this specification have been chosen to reflect commonly used terminology in the field, considering the functionality of the invention, but these may vary depending on the intentions of the skilled artisan, precedents, the emergence of new technologies, and so forth. Additionally, there may be instances where the applicant has chosen specific terminology, in which case, the meaning will be detailed in the relevant portion of the description of the invention. Therefore, the terms used in this invention should not be construed merely as nominal designations but should be defined based on their meanings and their application throughout the entirety of this invention.

Unless otherwise defined, all terms used herein, including technical or scientific terms, have the same meaning as understood by those with ordinary skill in the art to which this invention belongs. Terms that are generally defined in standard dictionaries should be interpreted to have the same meaning as the context of the relevant technology dictates, and they should not be interpreted in an idealized or overly formal sense unless explicitly defined in this application.

Numerical ranges include the values defined within those ranges. All maximum numerical limits disclosed throughout this specification include all lower numerical limits as if explicitly written. All minimum numerical limits disclosed throughout this specification include all higher numerical limits as if explicitly written. All numerical limits disclosed throughout this specification will include every narrower numerical range that may be reasonably inferred unless explicitly stated to the contrary.

Hereinafter, a detailed description will be given as to the present invention.

Radioactive Element Adsorbent Containing Magnesium Silicate

The present invention provides an adsorbent for radioactive element that contains magnesium silicate.

The radioactive element may be selected from the group consisting of cesium, cobalt, and strontium.

The pore size of the magnesium silicate may be in the range of 33 to 40 Å, preferably 34 to 38 Å.

The weight of the magnesium silicate may be in the range of 0.15 to 0.25 g, preferably 0.19 to 0.21 g.

The specific surface area of the magnesium silicate may be in the range of 40 to 60 m²/g, preferably 43 to 50 m²/g.

The pore volume of the magnesium silicate may be in the range of 0.02 to 0.1 cm³/g, preferably 0.02 to 0.06 cm³/g.

The magnesium silicate may have a cesium removal efficiency of 95 to 100%, preferably 97 to 100%. The cesium removal efficiency can be determined as given by the following Equation 1, where $C_i$ is the initial concentration of metal ions and $C_\varepsilon$ is the concentration of metal ions after adsorption.

Likewise, the magnesium silicate may have a cobalt removal efficiency of 95 to 100%, preferably 98 to 100%. The cobalt removal efficiency can be calculated according to the following Equation 1, where $C_i$ is the initial concentration of metal ions and $C_\varepsilon$ is the concentration of metal ions after adsorption.

Similarly, the magnesium silicate may have a strontium removal efficiency of 95 to 100%, preferably 96 to 100%. The strontium removal efficiency can be determined as given by the following Equation 1, where $C_i$ is the initial concentration of metal ions and $C_\varepsilon$ is the concentration of metal ions after adsorption.

$$[\text{Equation 1}]$$
$$\frac{c_i - c_f}{c_i} \times 100$$

The magnesium silicate may have a silicon (Si) content of 70 to 80% and a magnesium (Mg) content of 18 to 25%, with the Mg:Si ratio of 1:3 to 1:4.

The magnesium silicate may comprise, based on 100 parts by weight of the magnesium silicate, 14.4 to 14.6 parts by weight of MgO and 72.4 to 72.6 parts by weight of $SiO_2$.

The magnesium silicate has the MgO content lower by 3 to 4% and the $SiO_2$ content higher by 8 to 8.5% compared to the magnesium silicate according to the USP/NF standard. Preferably, the magnesium silicate has the MgO content lower by 3.2 to 3.4% and the $SiO_2$ content higher by 8.1 to 8.3% compared to the magnesium silicate according to the USP/NF standard.

The magnesium silicate according to the USP/NF standard has an MgO content of 15% and an $SiO_2$ content of 67%.

Manufacturing Method for Radioactive Element Adsorbent Containing Magnesium Silicate

The present invention also provides a method for manufacturing an adsorbent for radioactive element that contains magnesium silicate.

The method for manufacturing an absorbent for radioactive element comprises: (A1) preparing a silicate precursor; (A2) mixing a magnesium precursor and an ammonium salt to prepare a mixture; (A3) adding the silicate precursor to the mixture obtained in step (A2) to prepare an adsorbent for radioactive element that contains magnesium silicate.

The step (A1) involves preparing a silicate precursor, which can be made by adding tetraethyl orthosilicate (TEOS) to a mixture of alcohol, water, and aqueous ammonia ($NH_3H_2O$, ammonia-water), followed by stirring at 200 to 300 rpm for 1 to 3 hours. The stirred mixture is centrifuged and dried at 60 to 80°C to obtain a silicate precursor.

The silicate precursor may be at least one selected from the group consisting of silica ($SiO_2$), sodium silicate, tetramethyl orthosilicate, tetraethyl orthosilicate, tetrapropyl orthosilicate, triethoxyethylsilane (TEES), and 1,2-bis(triethoxysilyl)ethane (BTSE) .

The step (A2) is mixing a magnesium precursor and an ammonium salt to prepare a mixture. The magnesium precursor may be at least one selected from the group consisting of magnesium nitrate (Mg $(NO_3)_2$), magnesium sulfate ($MgSO_4$), and magnesium chloride ($MgCl_2$). The magnesium precursor may be either a single precursor or a composite precursor. The ammonium salt may be at least one selected from the group consisting of ammonium chloride ($NH_4Cl$), ammonium nitrate ($NH_4NO_3$), and ammonium sulfate (($NH_4)_2SO_4$).

Specifically, the step (A2) involves dissolving a magnesium precursor and an ammonium salt in distilled water and adding an ammonia solution ($NH_4OH$) to produce a mixture. Preferably, the mixture can be prepared by dissolving magnesium chloride ($MgCl_2$) and ammonium chloride ($NH_4Cl$) in distilled water and adding 23-33% ammonia solution.

The step (A3) is adding the silicate precursor to the mixture to prepare an adsorbent for radioactive element that contains magnesium silicate. Specifically, the step (A3) involves dispersing the silicate precursor in distilled water and adding the dispersed solution to a mixture of the magnesium precursor, ammonium salt and ammonia solution. After homogenizing, the homogeneous mixture can be reacted at 120 to 160°C for 10 to 14 hours to release Si ions from the spherical silica ($SiO_2$) as the silicate precursor and induce interactions between the released Si ions and magnesium ions. Subsequently, the reaction product is cooled down and dried at a temperature of 60 to 80°C to produce magnesium silicate with an adsorption capacity for radioactive elements.

Hereinafter, a detailed description will be given as to the examples of the present invention, which are not construed to limit the present invention.

Example 1: Manufacturing of Adsorbent for Radioactive Element Containing Magnesium Silicate

1-1. Preparation of Silicate Precursor

Ethanol, distilled water, and aqueous ammonia ($NH_3H_2O$, ammonia-water) were mixed homogeneously. Tetraethyl orthosilicate (TEOS) was injected into the mixture of ethanol, distilled water and aqueous ammonia, and the mixture was stirred at room temperature for 2 hours at a speed of 250 rpm. A high-speed centrifugation was performed to separate a solid phase from the resultant mixture. The solid phase thus obtained was washed with distilled water and ethanol and then dried at 70°C to prepare micro-silica ($SiO_2$), which was a silicate precursor as micro-sized particles.

1-2. Preparation of Adsorbent for Radioactive Element Containing Magnesium Silicate

In order to produce magnesium silicate with an adsorption capacity for radioactive elements, the Stöber process was adopted to prepare spherical silica ($SiO_2$) as a silicate precursor optimized in terms of specific surface area, pore volume, and pore size.

Magnesium chloride ($MgCl_2$, 0.75 mmol) and ammonium chloride ($NH_4Cl$, 10 mmol) were dissolved in 30 mL of distilled water, followed by adding 1 mL of 28% ammonia solution ($NH_4OH$) to prepare a mixture. 0.1 g of the above-prepared sodium silicate with micro-sized particles was dispersed in 20 mL of distilled water, and the resultant dispersion was added to the mixture, which was stirred until homogenized. The homogeneous mixture was transferred to an autoclave and reacted at 140°C for 12 hours to release Si ions from the spherical silica ($SiO_2$) prepared as the silicate precursor and induce a reaction for interactions between the released Si ions and magnesium ions. Then, the reaction mixture was cooled down to room temperature. The magnesium silicate thus obtained was filtered, washed with distilled water, and dried at 70°C to prepare a magnesium silicate with an adsorption capacity for radioactive elements.

Comparative Example 1: Preparation of Magnesium Silicate with Adjusted Molarity of Magnesium Chloride

In order to assess the adsorption capacity for radioactive elements as a function of the molarity of magnesium chloride, magnesium silicate was prepared with a molarity of magnesium chloride adjusted from 0.75 mmol to 0.62 mmol. The procedures were performed in the same manner as described in Example 1, except for the molarity of magnesium chloride.

Comparative Example 2: Preparation of Illite

Illite was initially extracted from mines and then separately processed through crushing and drying processes.

Experimental Example 1: Surface Area Analysis of Magnesium Silicate

Experimental Example 1 was carried out for a BET surface area analysis of the magnesium silicate prepared in Example 1 and Comparative Examples 1 and 2. The results are presented in Table 1.

According to the results of the Experimental Example 1, the pore size of the magnesium silicate prepared in Example 1 was 35.279 Å, while the magnesium silicates of Comparative Examples 1 and 2 had a pore size of 78.932 Å and 115.30 Å, respectively.

The specific surface area of the magnesium silicate prepared in Example 1 was 46.0530 $m^2/g$, whereas the magnesium silicates of Comparative Examples 1 and 2 had a specific surface area of 206.1126 $m^2/g$ and 10.1502 $m^2/g$, respectively.

The pore volume of the magnesium silicate prepared in Example 1 was 0.0406 $cm^3/g$, whereas the magnesium silicates of Comparative Examples 1 and 2 had a pore volume of 0.4057 $cm^3/g$ and 0.0292 $cm^3/g$, respectively.

[Table 1]

| Products | Specific surface area ($m^2$/g) | Pore volume ($cm^3$/g) | Pore size (Å) |
|---|---|---|---|
| Example 1 | 46.0530 | 0.0406 | 35.279 |
| Comparative Example 1 | 206.1126 | 0.4057 | 78.932 |
| Comparative Example 2 | 10.1502 | 0.0292 | 115.30 |

Experimental Example 2: Cesium Removal Efficiency of Magnesium Silicate

Experimental Example 2 was conducted to assess the cesium (Cs) removal efficiency of the magnesium silicates prepared in Example 1 and Comparative Examples 1 and 2.

126 mg of cesium chloride was dissolved in 1 L of distilled water and sonicated for 10 minutes for dispersion. Then, 100 mL of the dispersion was mixed with 1 g of each magnesium silicate or illite adsorbent prepared in Example 1 or Comparative Example 1 or 2 while stirring at 300 rpm. The mixture of the dispersion and adsorbent was subjected to centrifugation at 8000 rpm for 5 minutes to separate the supernatant. The residual cesium concentration in the supernatant was determined using Inductively Coupled Plasma-Mass Spectrometry (ICP-MS) . The results of Experimental Example 2 are presented in Table 2 below.

According to the results of Experimental Example 2, the cesium removal efficiency of Example 1 was 98.84%, while those of Comparative Examples 1 and 2 were 80.60% and 79.0%, respectively. The cesium removal efficiency was calculated using Equation 1, where $C_i$ is the initial concentration of metal ions and $C_\varepsilon$ is the concentration of metal ions after adsorption.

Equation 1:

$$\text{Cesium Removal Efficiency (\%)} = \frac{c_i - c_f}{c_i} \times 100$$

[Table 2]

| Products | ICP-MS | |
|---|---|---|
| | Residual amount (Cs) (mg/L) | Removal efficiency(Cs) (% : per 100 ppm) |
| Example 1 | 1.16 | 98.84 |
| Comparative Example 1 | 19.4 | 80.60 |
| Comparative Example 2 | 79.0 | 21.00 |

Experimental Example 3: Color Change after Cesium Adsorption of Magnesium Silicate

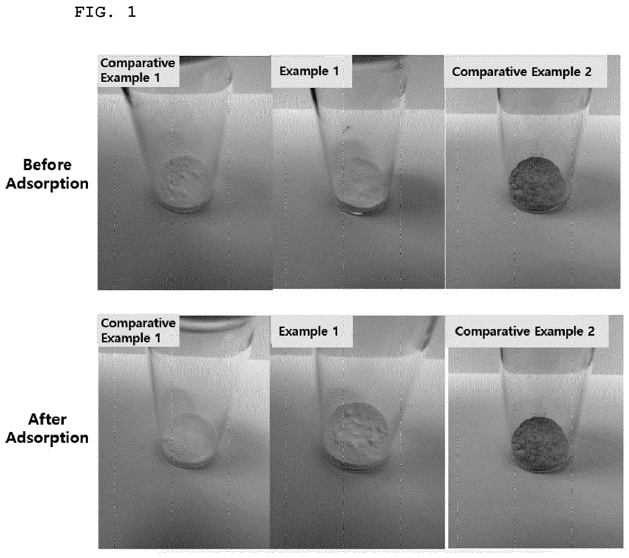

Experimental Example 3 was conducted to observe the color change after cesium adsorption of the magnesium silicates and illite prepared in Example 1 and Comparative Examples 1 and 2. The cesium adsorption using magnesium silicate or illite was carried out in the same manner as described in Experimental Example 2. The results are presented in FIG. 1.

According to the results of Experimental Example 3, there was no color change after cesium adsorption using all the magnesium silicates and illite from Example 1 and Comparative Examples 1 and 2 (refer to FIG. 1).

Experimental Example 4: Cobalt Removal Efficiency of Magnesium Silicate

Experimental Example 4 was conducted to assess the cobalt removal efficiency of the magnesium silicates prepared in Example 1 and Comparative Examples 1 and 2.

493.8 mg of cobalt nitrate was dissolved in 1 L of distilled water and sonicated for 10 minutes for dispersion. Then, 100 mL of the dispersion was mixed with 1 g of each magnesium silicate or illite adsorbent prepared in Example 1 or Comparative Example 1 or 2 while stirring at 300 rpm. The mixture of the dispersion and adsorbent was subjected to centrifugation at 8000 rpm for 5 minutes to separate the supernatant. The residual cobalt concentration in the supernatant was determined using Inductively Coupled Plasma-Mass Spectrometry (ICP-MS) . The results of Experimental Example 4 are presented in Table 3 below.

According to the results of Experimental Example 4, the cobalt removal efficiency of Example 1 was 99. 98%, while those of Comparative Examples 1 and 2 were 99.97% and 10.1%, respectively. The cobalt removal efficiency was calculated using Equation 1.

[Table 3]

| Products | ICP-MS | |
|---|---|---|
| | Residual amount (Co) (mg/L) | Removal efficiency(Co) (% : 100 ppm 기준 ) |
| Example 1 | 0.082 | 99.98 |
| Comparative Example 1 | 0.012 | 99.97 |
| Comparative Example 2 | 89.9 | 10.1 |

Experimental Example 5: Color Change after Cobalt Adsorption of Magnesium Silicate

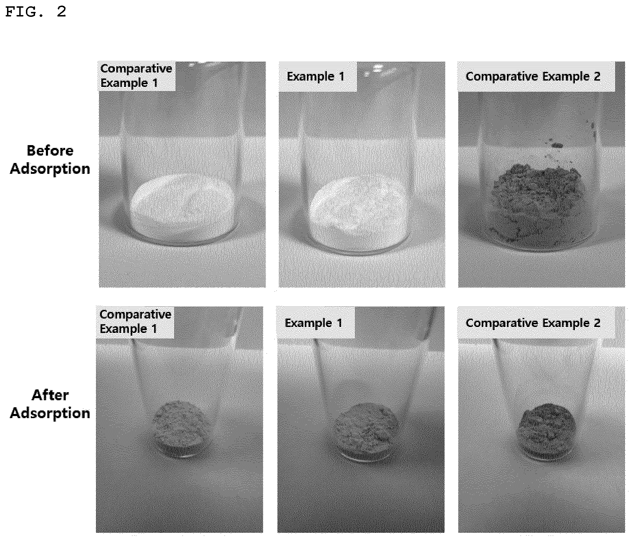

Experimental Example 5 was conducted to observe the color change after cobalt adsorption of the magnesium silicates and illite prepared in Example 1 and Comparative Examples 1 and 2. The cobalt adsorption using the magnesium silicate of Example 1 was carried out in the same manner as described in Experimental Example 4. The results are presented in FIG. 2.

According to the results of Experimental Example 5, the magnesium silicate of Example 1 turned from white to bluish-gray after cobalt adsorption, while the magnesium silicate of Comparative Example 1 and the illite of Comparative Example 2 showed no color change (refer to FIG. 2).

Experimental Example 6: Strontium Removal Efficiency of Magnesium Silicate

Experimental Example 6 was conducted to assess the strontium removal efficiency of the magnesium silicates prepared in Example 1 and Comparative Examples 1 and 2.

180.9 mg of strontium chloride was dissolved in 1 L of distilled water and sonicated for 10 minutes for dispersion. Then, 100 mL of the dispersion was mixed with 1 g of each magnesium silicate or illite adsorbent prepared in Example 1 or Comparative Example 1 or 2 while stirring at 300 rpm. The solution containing the dispersion and the adsorbent was subjected to centrifugation at 8000 rpm for 5 minutes to separate the supernatant. The residual strontium concentration in the supernatant was determined using Inductively Coupled Plasma-Mass Spectrometry (ICP-MS). The results of Experimental Example 6 are presented in Table 4 below.

According to the results of Experimental Example 6, the strontium removal efficiency of Example 1 was 97.55%, while those of Comparative Examples 1 and 2 were 71.10% and 16.0%, respectively. The strontium removal efficiency was calculated using Equation 1.

[Table 4]

| Products | ICP-MS | |
|---|---|---|
| | Residual amount (Sr) (mg/L) | Removal efficiency(Sr) (% : per 100 ppm) |
| Example 1 | 2.45 | 97.55 |
| Comparative Example 1 | 28.9 | 71. 10 |
| Comparative Example 2 | 84.00 | 16.00 |

Experimental Example 7: Color Change after Strontium Adsorption of Magnesium Silicate

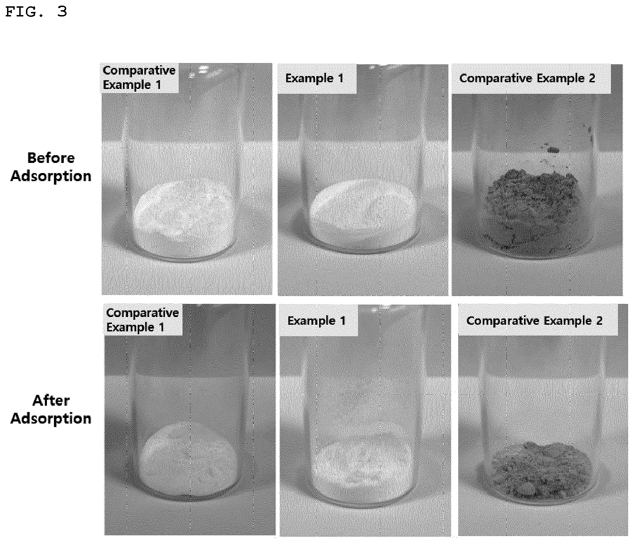

Experimental Example 7 was conducted to observe the color change after strontium adsorption of the magnesium silicates and illite prepared in Example 1 and Comparative Examples 1 and 2. The strontium adsorption using the magnesium silicate of Example 1 was carried out in the same manner as described in Experimental Example 6. The results are presented in FIG. 3.

According to the results of Experimental Example 7, there was no color change after strontium adsorption using all the magnesium silicates and illite from Example 1 and Comparative Examples 1 and 2 (refer to FIG. 3).

Experimental Example 8: Elemental Composition of Magnesium Silicate

The elemental composition of the magnesium silicate and illite prepared in Example 1 and Comparative Examples 1 and 2 was analyzed.

The component analysis of the magnesium silicate and illite was conducted using SEM (CUBE **II**) from EMCRAFT equipped with an EDS detector (Xplore compact 30) and an AZtecOne software.

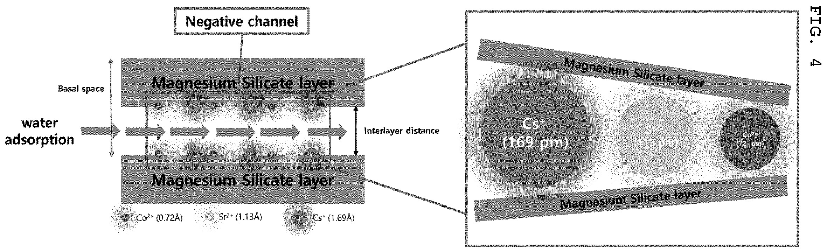

According to the results of Experimental Example 8, showed the magnesium silicate of Example 1 had a Mg:Si ratio of 1:4.17 and the highest adsorption capacity for radioactive elements like cesium, cobalt, and strontium (Table 5). This presumably resulted from the formation of negative channels by oxygen atoms between the layers of magnesium silicate, increasing the adsorption capacity for cesium, cobalt, and strontium (refer to FIG. 4). In the case of the illite prepared in Comparative Example 2, the silicate proportion was high, yet the coexistence of K, Fe, and Al ions was considered as resulting in lower adsorption capacity for radioactive elements like cesium, cobalt, and strontium.

[Table 5]

| Products | Element contents (%) | | | | | | |
|---|---|---|---|---|---|---|---|
| | Al | Si | Mg | K | Fe | Al:Si ratio | Mg:Si ratio |
| Example 1 | - | 77.96 | 22.04 | - | - | - | 1 : 3.54 |
| Comparative Example 1 | - | 80.64 | 19.36 | - | - | - | 1 : 4.17 |
| Comparative Example 2 | 20.98 | 50.11 | 0.71 | 10.50 | 17.70 | 1 : 2.39 | 1 : 70.58 |

Experimental Example 9: Adsorption Capacity Based on Ion Size of Radioactive Element

With the ion size of radioactive elements like cesium ($Cs^+$), cobalt ($Co^{2+}$) and strontium ($Sr^{2+}$) listed in Table 6, the radioactive elements were compared in regards to the adsorption capacity as a function of the ion size. According to Table 6, cesium ($Cs^+$), cobalt ($Co^{2+}$) and strontium ($Sr^{2+}$) have an ion size of 169 pm, 72 pm and 113 pm, respectively. When arranged in ascending order of size, cobalt ($Co^{2+}$) < strontium ($Sr^{2+}$) < cesium ($Cs^+$), indicating that the smaller ion radius of cobalt ($Co^{2+}$) allows it to fit more readily into the negative channels of the magnesium silicate, resulting in a higher removal efficiency.

[Table 6]

| Elements | Ion size*(pm) |
|---|---|
| Cesium (Cs) | 169 |
| Cobalt (Co) | 72 |
| Strontium (Sr) | 113 |

Experimental Example 10: XRF Analysis of Magnesium Silicate

An XRF analysis was conducted using the magnesium silicates and illite prepared in Example 1 and Comparative Examples 1 and 2. The results are presented in Table 7.

[Table 7]

| Products | XRF results (wt%) | | | | | | | | | |
|---|---|---|---|---|---|---|---|---|---|---|
| | $Na_2O$ | MgO | $Al_2O_3$ | $SiO_2$ | $P_2O_5$ | $SO_3$ | CaO | $Fe_2O_3$ | Cl | Total |
| Example 1 | 3.31 | 14.5 | 0.328 | 72.5 | 1.19 | 7. 71 | 0.357 | 0.0716 | 0 | 100 |
| Comparative Example 1 | 2.52 | 15.4 | 0.166 | 70.6 | 1.43 | 9.34 | 0.412 | 0.0279 | 0.058 | 100 |
| Comparative Example 2 | 3.4 | 13.9 | 0.109 | 80.9 | 1.28 | 0 | 0.44 | 0.0287 | 0 | 100 |

According to the results of Experimental Example 10, the magnesium silicate of Example 1 contains 14.5 wt% MgO and 72.5 wt% $SiO_2$, while the magnesium silicate of Comparative Example 1 contains 15.4 wt% MgO and 70.6 wt% $SiO_2$, and the illite of Comparative Example 2 contains 13.9 wt% MgO and 80.9 wt% $SiO_2$.

From the foregoing description of the present invention, it should be apparent to those skilled in the present invention that many modifications and variations are possible without departing from the concept or essential features of the present invention. Therefore, the foregoing examples are to be construed as merely illustrative, and not limitative of the present invention.

**Claims**

1.  A radioactive element adsorbent comprising magnesium silicate.

2.  The radioactive element adsorbent according to claim 1, wherein the radioactive element is at least one selected from the group consisting of cesium, cobalt, and strontium.

3.  The radioactive element adsorbent according to claim 1, wherein the magnesium silicate has a pore size of 33 to 40 Å.

4.  The radioactive element adsorbent according to claim 1, wherein the magnesium silicate has a magnesium oxide (MgO) content lower by 3 to 4% and a silicon dioxide ($SiO_2$) content higher by 8 to 8.5% than the magnesium silicate according to USP/NF standards.

5.  The radioactive element adsorbent according to claim 1, wherein the magnesium silicate comprises 14.4 to 14.6 parts by weight of MgO and 72.4 to 72.6 parts by weight of $SiO_2$ with respect to 100 parts by weight of the magnesium silicate.

6.  A method for manufacturing a radioactive element adsorbent comprising magnesium silicate, comprising:

    (A1) preparing a silicate precursor;
    (A2) mixing a magnesium precursor and an ammonium salt to prepare a mixture; and
    (A3) adding the silicate precursor to the mixture to produce an adsorbent for radioactive element that comprises magnesium silicate.

7.  The method according to claim 6, wherein the magnesium precursor is magnesium chloride ($MgCl_2$).

FIG. 1

FIG. 2

FIG. 3

|  | | |
|---|---|---|
| **Before Adsorption** | | |

Comparative Example 1 — Example 1 — Comparative Example 2 (Before Adsorption)

Comparative Example 1 — Example 1 — Comparative Example 2 (After Adsorption)

FIG. 4

**Europäisches Patentamt**
**European Patent Office**
**Office européen des brevets**

**Application Number**

EP 23 20 8759

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YONGQIANG WANG ET AL: "Chemical-Template Synthesis of Micro/Nanoscale Magnesium Silicate Hollow Spheres for Waste-Water Treatment", CHEMISTRY - A EUROPEAN JOURNAL, JOHN WILEY & SONS, INC, DE, vol. 16, no. 11, 4 February 2010 (2010-02-04), pages 3497-3503, XP071830768, ISSN: 0947-6539, DOI: 10.1002/CHEM.200902799 * abstract * * figures 7,8 * * Experimental Section, Preparation of the magnesium silicate hollow spheres; page 3502, left-hand column * | 1-7 | INV. B01J20/04 B01J20/10 B01J20/28 B01J20/30 C01B33/22 C02F1/28 G21F9/12 C02F101/00 |
| X | KRAVCHENKO M. V. ET AL: "Inorganic sorbents based on magnesium silicates obtained by two synthetic routes", ENVIRONMENTAL EARTH SCIENCES, [Online] vol. 81, no. 24, 1 December 2022 (2022-12-01), XP093165336, Berlin/Heidelberg ISSN: 1866-6280, DOI: 10.1007/s12665-022-10664-7 Retrieved from the Internet: URL:https://link.springer.com/article/10.1007/s12665-022-10664-7/fulltext.html> [retrieved on 2024-05-22] * abstract * * Experimental, Synthesis of magnesium silicates; page 2 * * tables 1,3 * * figure 6 * * Adsorption capacity of silicates; page 6, right-hand column * | 1-5 | TECHNICAL FIELDS SEARCHED (IPC) B01J C01B C02F G21C G21F |

-/--

The present search report has been drawn up for all claims

| Place of search | Date of completion of the search | Examiner |
|---|---|---|
| The Hague | 23 May 2024 | Kaluza, Nicoleta |

page 1 of 2

Europäisches Patentamt

European Patent Office

Office européen des brevets

**EUROPEAN SEARCH REPORT**

Application Number

EP 23 20 8759

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SUN ZHIWEI ET AL: "Facile synthesis of porous hydrated magnesium silicate adsorbent from ordinary silica gel", MATERIALS LETTERS, [Online] vol. 272, 1 August 2020 (2020-08-01), page 127886, XP055976312, AMSTERDAM, NL ISSN: 0167-577X, DOI: 10.1016/j.matlet.2020.127886 * 2. Experimental; page 1, right-hand column - page 2, left-hand column * | 1-7 | |

-----

TECHNICAL FIELDS
SEARCHED      (IPC)

The present search report has been drawn up for all claims

| Place of search | Date of completion of the search | Examiner |
|---|---|---|
| The Hague | 23 May 2024 | Kaluza, Nicoleta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 454 749 A1**

**Patent documents cited in the description**

- KR 102221740